(19) Europäisches Patentamt

European Patent Office

Office européen des brevets

(11) Veröffentlichungsnummer: **0 199 731**
**B1**

(12) # EUROPÄISCHE PATENTSCHRIFT

(45) Veröffentlichungstag der Patentschrift:
**11.05.88**

(21) Anmeldenummer: **85901409.4**

(22) Anmeldetag: **26.02.85**

(86) Internationale Anmeldenummer:
**PCT/EP 85/00069**

(87) Internationale Veröffentlichungsnummer:
**WO 85/04230 (26.09.85 Gazette 85/21)**

(51) Int. Cl.⁴: **F 16 H 5/36,** G 05 G 9/18

(54) **GETRIEBESCHALTEINRICHTUNG.**

(30) Priorität: **17.03.84 PC /EP84/000 81**

(43) Veröffentlichungstag der Anmeldung:
**05.11.86 Patentblatt 86/45**

(45) Bekanntmachung des Hinweises auf die Patenterteilung:
**11.05.88 Patentblatt 88/19**

(84) Benannte Vertragsstaaten:
**AT DE FR GB**

(56) Entgegenhaltungen:
**DE - A - 2 813 099**
**DE - U - 7 532 116**
**FR - A - 1 568 530**
**GB - A - 2 041 468**
**GB - A - 2 089 450**
**GB - A - 2 127 503**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **ACHBERGER, Gottfried, Ammernweg 3, D-7990 Friedrichshafen (DE)**
Erfinder: **ANGELE, Eugen, Raderacher Strasse 15, D-7990 Friedrichshafen (DE)**

(74) Vertreter: **Raue, Reimund, Zahnradfabrik Friedrichshafen AG Löwentaler Strasse 100 Postfach 2520, D-7990 Friedrichshafen 1 (DE)**

ACTORUM AG

## Beschreibung

Die Erfindung betrifft eine Schalteinrichtung nach dem Oberbegriff des Hauptanspruchs.

Schalteinrichtungen dieser Art sind vorteilhaft, wenn bei einem grossen Zahnradgetriebe in Gruppenbauweise mit einem Wendegetriebe und einem Bereichsgetriebe nur eins der beiden mit einem gemeinsamen Handschalthebel zu schaltenden Gruppengetriebe, beispielsweise das Wendegetriebe, wegen seiner geringen Drehmassen leicht genug schaltbar ist, während das zweite Gruppengetriebe, beispielsweise das Bereichsgetriebe, wegen seiner grossen Drehmassen sehr schwer schaltbar ist.

Man nutzt dann die Schaltbewegung, ein Bewegen des Handschalthebels in Richtung der Schaltgassen bzw. in Fahrzeuglängsrichtung, für die rein mechanische Schaltung des Wendegetriebes, weil einem Fahrer in Schaltrichtung grössere Kräfte und Wege verfügbar sind als in Wälzrichtung bzw. quer zur Fahrzeuglängsrichtung. Dagegen reichen die Kräfte und Wege in Wählrichtung immer aus, um ein Vierwegeventil für die Schaltung des Bereichsgetriebes zu steuern.

Bei einer bekannten Schalteinrichtung dieser Art (GB 20 41 468, entstanden aus DE-OS 29 05 097) ist das Vierwegeventil ein 4/5-Wegeventil mit einer neutralen Mittelstellung C, zwei beidseits benachbarten aktiven Zwischenstellungen B, D und zwei neutralen Aussenstellungen A, E. Die Steuerfläche an der Schaltwelle hat dementsprechend fünf Schaltfelder, ausdrücklich bezeichnet mit den Grossbuchstaben A, B, C, D, E. Das Vierwegeventil besteht aus einer grossen Anzahl von beweglichen Einzelteilen und enthält unter anderem zwei Doppelsitzventile und sieben Federn. Der konstruktive Aufwand erscheint sehr hoch.

Der Erfindung liegt die Aufgabe zugrunde, diesen Aufwand wesentlich zu verringern.

Diese Aufgabe wird mit den Merkmalen des Hauptanspruchs gelöst.

Das Vierwegeventil ist ein einfaches 4/3-Wegeventil mit einer neutralen Mittelstellung und zwei aktiven Aussenstellungen. Die Steuerfläche an der Schaltwelle hat dementsprechend nur drei Schaltfelder: eine Zylinderfläche für die neutrale Mittelstellung, eine Steuernut für eine erste aktive Aussenstellung und einen Steuernocken für die zweite aktive Aussenstellung. Das Vierwegeventil ist ein einfaches Schieberventil mit nur zwei beweglichen Einzelteilen, mit nur einer einzigen Feder, die einen einzigen Ventilschieber gegen die Steuerfläche drückt.

Mit den Merkmalen des Anspruchs 2 wird erreicht, dass das Bereichsgetriebe immer nur gegen seine eigenen grossen Drehmassen geschaltet wird und seine Schaltungsteile nicht durch die Drehmassen des Wendegetriebes zusätzlich belastet werden können. Auch wird das Bereichsgetriebe in der jeweils geschalteten Stufe mechanisch festgehalten, wenn mit dem Schalten des Wendegetriebes in eine Richtung das Vierwegeventil in seine neutrale Mittelstellung zurückkehrt und wieder beide Seiten des Schaltzylinders mit dem Behälter verbindet.

Mit den Merkmalen des Anspruchs 3 wird erreicht, dass die langsame Stufe eines Kriechgruppengetriebes nur zusammen mit der langsamen Stufe des Bereichsgetriebes geschaltet sein kann.

Anspruch 4 nennt eine zusätzliche Funktion des bereits das Wendegetriebe und das Bereichsgetriebe schaltenden Handschalthebels.

In der Zeichnung ist ein Ausführungsbeispiel einer Schalteinrichtung nach der Erfindung dargestellt.

Fig. 1 bis 6 zeigen die wesentlichen Bauteile der Schalteinrichtung teils in Ansicht, teils im Schnitt.

Fig. 7 zeigt ein Fluid-Schaltschema.

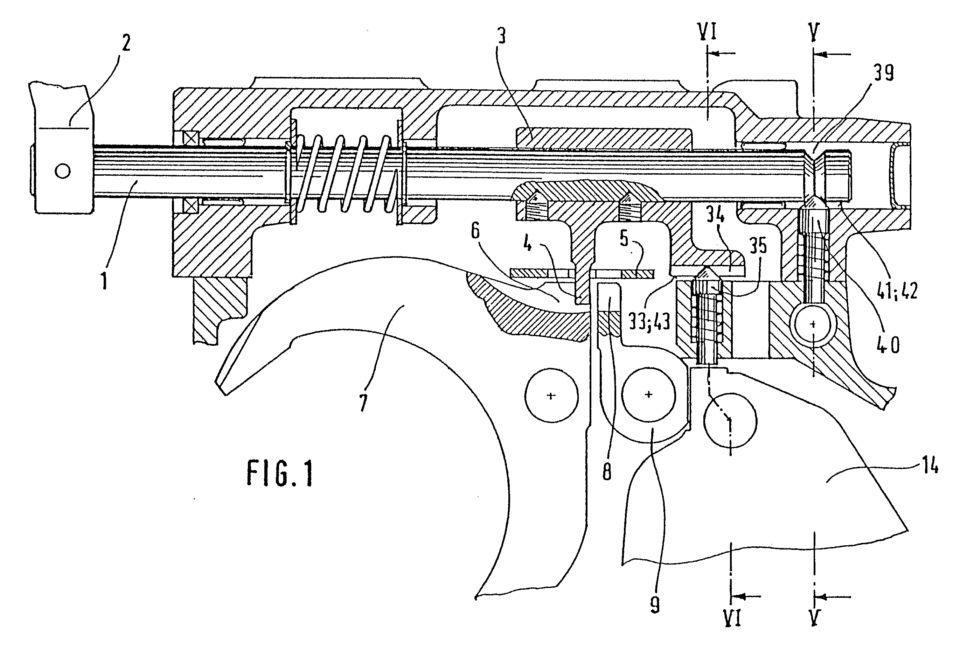

Mit einer Schaltwelle 1 sind ein Handschalthebel 2 und ein Mitnehmer 3 fest verbunden (Fig. 1).

Der Mitnehmer 3 trägt einen Schaltfinger 4, der in einer gehäusefesten Schaltkulisse 5 geführt ist und wechselweise entweder in eine Nut 6 einer Schaltgabel 7 zur Schaltung eines Wendegetriebes oder in eine Nut 8 eines Mitnehmers 9 zur Schaltung einer Parksperre eingreift, und eine Steuerfläche 10 zur Betätigung eines Ventilschiebers 11 eines Wegeventils 12, das einen Schaltzylinder 13 zur Betätigung einer Schaltgabel 14 für die Schaltung eines Bereichsgetriebes steuert (Fig. 1 bis 4 und 7).

Die Schaltkulisse 5 führt und begrenzt die Bewegungen des Schaltfingers 4 in drei parallelen Schaltgassen 15, 16, 17 und — rechtwinklig dazu — in einem mittleren Wählpfad 18 (Fig. 1 bis 4).

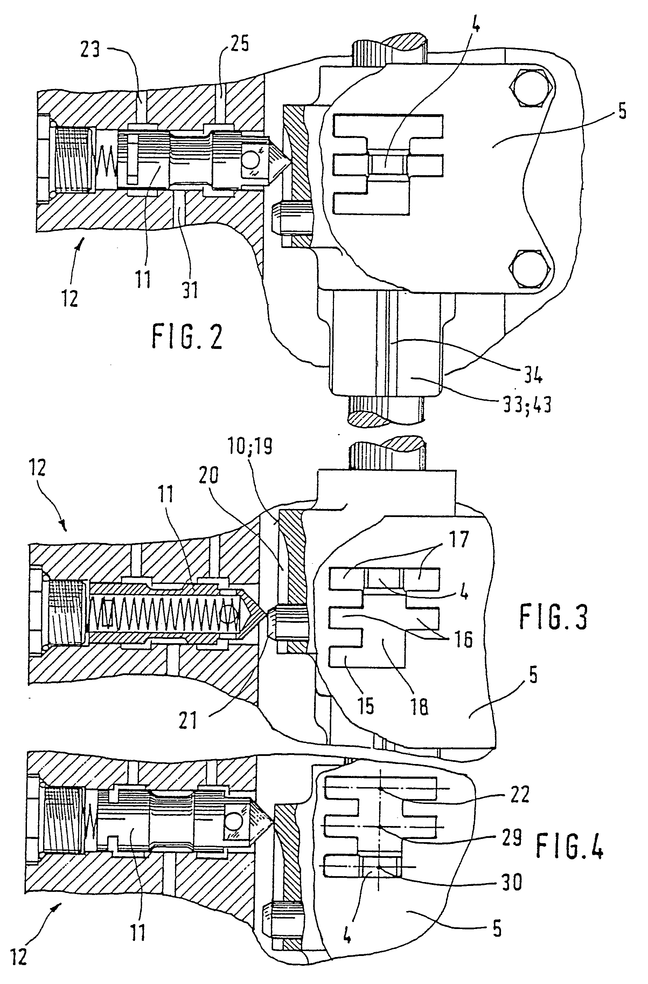

In der ersten, äusseren Schaltgasse 15 geführt, betätigt der Schaltfinger 4 den Mitnehmer 9 zur Schaltung der Parksperre (Fig. 1 und 4).

In der zweiten, mittleren Schaltgasse 16 und in der dritten, äusseren Schaltgasse 17 geführt, betätigt der Schaltfinger 4 die Schaltgabel 7 zur Schaltung des Wendegetriebes (Fig. 1 bis 3).

Die Steuerfläche 10 ist im wesentlichen ein Teil einer zur Schaltwelle 1 konzentrischen Zylinderfläche 19 und weist eine axiale Steuernut 20 und an einem Ende dieser Steuernut 20 einen Steuernocken 21 auf (Fig. 2 bis 4).

Der Ventilschieber 11 des Wegeventils 12 liegt durch Federkraft immer an der Steuerfläche 10 an (Fig. 2 bis 4).

Befindet sich der Schaltfinger 4 im Knotenpunkt 22 zwischen der dritten Schaltgasse 17 und dem Wählpfad 18, so wird der Ventilschieber 11 durch den Steuernocken 21 in eine erste Endstellung gedrückt. Das Wegeventil 12 verbindet dann eine erste Anschlussleitung 23 eines doppelt wirkenden Schaltzylinders 13 mit einer Fluidquelle 24 und die zweite Anschlussleitung 25 des Schaltzylinders 13 mit einem Behälter 26. Ein Kolben 27 des Schaltzylinders 13 drückt dann eine fest mit dem Kolben 27 verbundene Schaltgabel 14 in eine erste Endstellung. Ein Bereichsgetriebe ist dann in seine schnelle Stufe geschaltet (Fig. 3).

Befindet sich der Schaltfinger 4 im Knotenpunkt 29 zwischen der zweiten Schaltgasse 16 und dem Wählpfad 18, so wird der Ventilschieber 11 durch Federkraft in die axiale Steuernut 20 eingetaucht und damit in eine zweite Endstellung gedrückt.

Das Wegeventil 12 verbindet dann die zweite Anschlussleitung 25 des Schaltzylinders 13 mit der Fluidquelle 24 und die erste Anschlussleitung 23 des Schaltzylinders 13 mit dem Behälter 26. Der Kolben 27 des Schaltzylinders 13 drückt dann die Schaltgabel 14 in eine zweite Endstellung. Das Bereichsgetriebe ist dann in seine langsame Stufe geschaltet (Fig. 1 und 2).

Befindet sich der Schaltfinger 4 in der Schaltgasse 15 oder aber ausserhalb des Wählpfades 18 in einer der Schaltgassen 16 oder 17, so liegt der Ventilschieber 11 durch Federkraft an der Zylinderfläche 19 der Steuerfläche 10 an und nimmt seine mittlere Neutralstellung ein. Das Wegeventil 12 sperrt dann eine Zulaufleitung 31 von der Fluidquelle 24 und verbindet die beiden Anschlussleitungen 23 und 25 des Schaltzylinders 13 mit dem Behälter 26 (Fig. 4).

Die Schaltgabel 14 für die Schaltung des Bereichsgetriebes trägt einen Sperrsteg 32. Der Mitnehmer 3 trägt eine zylindrische, zur Schaltwelle 1 konzentrische Sperrfläche 33. Die Sperrfläche 33 weist eine axiale Sperrnut 34 auf. Ein Sperrbolzen 35 wird durch Federkraft immer an die Sperrfläche 33 angelegt (Fig. 1, 2 und 6).

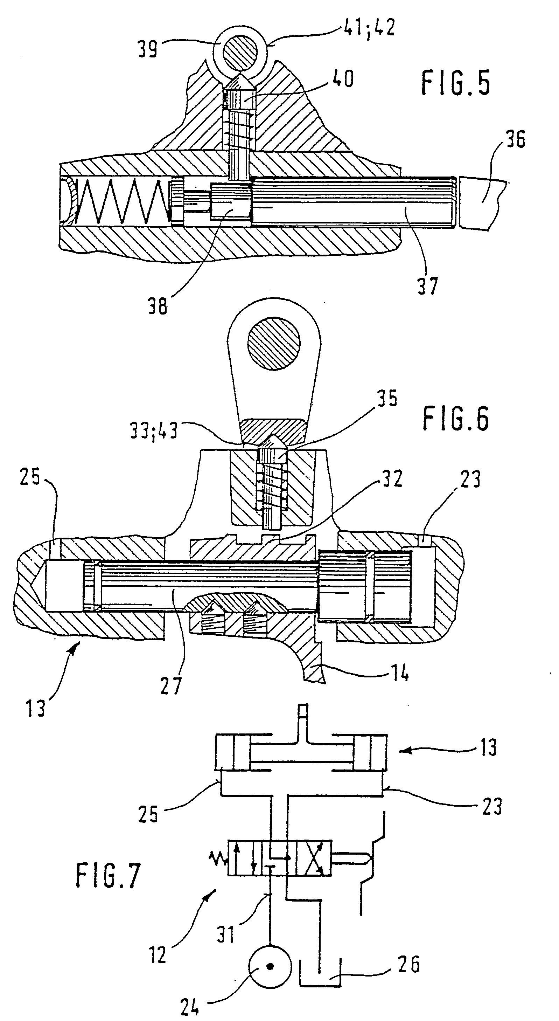

Der Sperrbolzen 35 wird in die axiale Sperrnut 34 eingetaucht und an seinem anderen Ende durch den Sperrsteg 32 abgestützt, wenn der Schaltfinger 4 sich im Wählpfad 18 befindet und die Schaltgabel 14 noch keine ihrer beiden Endstellungen erreicht hat. Der Sperrbolzen 35 verhindert in dieser ersten Sperrstellung eine Verdrehung der Schaltwelle 1 und damit eine Schaltung des Wendegetriebes oder der Parksperre, solange die Schaltung des Bereichsgetriebes noch nicht beendet ist (Fig. 1 und 6).

Hat die Schaltgabel 14 eine ihrer beiden Endstellungen erreicht und ist damit eine der beiden Stufen des Bereichsgetriebes geschaltet, kann der Sperrbolzen 35 neben dem Sperrsteg 32 eintauchen (Fig. 6).

Ist das Wendegetriebe oder die Parksperre geschaltet und damit der Schaltfinger 4 aus dem Wählpfad 18 herausbewegt, so ist auch der Sperrbolzen 35 aus der Sperrnut 34 herausgedrückt, so stützt sich der Sperrbolzen 35 auf der zylindrischen Sperrfläche 33 ab und taucht mit seinem anderen Ende neben dem Sperrsteg 32 der Schaltgabel 14 ein.

Der Sperrbolzen 35 hält in dieser zweiten Sperrstellung die Schaltgabel 14 in einer ihrer beiden Endstellungen und damit das Bereichsgetriebe in einer seiner beiden Schaltstufen fest, solange das Wendegetriebe oder die Parksperre geschaltet ist (Fig. 6).

Eine Schaltgabel 36 eines zusätzlichen Kriechgruppengetriebes verschiebt gegen Federkraft eine Sperrstange 37. Die Sperrstange 37 weist eine Sperrstufe 38 auf. Die Schaltwelle 1 weist eine umlaufende Sperrnut 39 auf. Zwischen der Sperrstange 37 und der Schaltwelle 1 ist ein Sperrbolzen 40 angeordnet. Der Sperrbolzen 40 liegt durch Federkraft immer an der Schaltwelle 1 an (Fig. 1 und 5).

In einer ersten Sperrstellung ist der Sperrbolzen 40 in die umlaufende Sperrnut 39 eingetaucht und wird sein anderes Ende durch die Sperrstufe 38 abgestützt. Der Sperrbolzen 40 hält dadurch die Schaltwelle 1 in ihrer axial mittleren Stellung für die langsame Stufe des Bereichsgetriebes fest, solange die langsame Stufe des Kriechgruppengetriebes geschaltet ist (Fig. 1 und 5).

In einer zweiten Sperrstellung wird der Sperrbolzen 40 durch die als Sperrfläche 41 dienende zylindrische Oberfläche der Schaltwelle 1 abgestützt und taucht mit seinem anderen Ende neben der Sperrstufe 38 ein. Sperrbolzen 40 und Sperrstange 37 gemeinsam verhindern so eine Verschiebung der Schaltgabel 36 in die Stellung für die langsame Stufe des Kriechgruppengetriebes und halten sie in der Stellung für die schnelle Stufe fest, bis die Schaltwelle 1 wieder in ihre axial mittlere Stellung für die langsame Stufe des Bereichsgetriebes verschoben ist (Fig. 5).

*Bezugszeichen*

| | |
|---|---|
| 1 | Schaltwelle |
| 2 | Handschalthebel |
| 3 | Mitnehmer |
| 4 | Schaltfinger |
| 5 | Schaltkulisse |
| 6 | Nut |
| 7 | Schaltgabel |
| 8 | Nut |
| 9 | Mitnehmer |
| 10 | Steuerfläche |
| 11 | Ventilschieber |
| 12 | Vierwegeventil |
| 13 | Schaltzylinder |
| 14 | Schaltgabel |
| 15 | Schaltgasse |
| 16 | Schaltgasse |
| 17 | Schaltgasse |
| 18 | Wählpfad |
| 19 | Zylinderfläche |
| 20 | Steuernut |
| 21 | Steuernocken |
| 22 | Knotenpunkt |
| 23 | Anschlussleitung |
| 24 | Fluidquelle |
| 25 | Anschlussleitung |
| 26 | Behälter |
| 27 | Kolben |
| 29 | Knotenpunkt |
| 30 | Knotenpunkt |
| 31 | Zulaufleitung |
| 32 | Sperrsteg |
| 33 | erste Sperrfläche |
| 34 | Sperrnut |
| 35 | erster Sperrbolzen |
| 36 | Schaltgabel |
| 37 | Sperrstange |
| 38 | Sperrstufe |
| 39 | Sperrnut |
| 40 | zweiter Sperrbolzen |
| 41 | zweite Sperrfläche |
| 42 | Zylinderfläche |
| 43 | Zylinderfläche |

## Patentansprüche

1. Schalteinrichtung mit den Merkmalen:
— ein Handschalthebel (2) schaltet ein Wendegetriebe und ein Bereichsgetriebe eines Zahnrad-Gruppengetriebes,
— eine gehäusefeste Schaltkulisse (5) führt den Handschalthebel (2) in parallelen Schaltgassen (15, 16, 17) und in einem Wählpfad (18) rechtwinklig zu den Schaltgassen (15, 16, 17),
— der Handschalthebel (2) ist mit einer Schaltwelle (1) und einer Steuerfläche (10) verbunden,
— die Steuerfläche (10) steuert einen Ventilschieber (11) eines Vierwegeventils (12),
— das Vierwegeventil (12) steuert Druckfluid zwischen einer Fluidquelle (24), zwei Seiten eines doppelt wirkenden Schaltzylinders (13) und einem Behälter (26),
— der Schaltzylinder (13) betätigt eine Schaltgabel (14) des Bereichsgetriebes, wenn der Handschalthebel (2) im Wählpfad (18) bewegt und die Schaltwelle (1) axial verschoben wird,
— ein Schaltfinger (4) an der Schaltwelle (1) betätigt eine Schaltgabel (7) des Wendegetriebes, wenn der Handschalthebel (2) in einer Schaltgasse (16, 17) bewegt und die Schaltwelle (1) verdreht wird,
gekennzeichnet durch die Merkmale:
— die Steuerfläche (10) ist ein Teil einer zur Schaltwelle (1) konzentrischen Zylinderfläche (19) mit einer axialen Steuernut (20) und in der gleichen Mantellinie einem Steuernocken (21),
— das Vierwegeventil (12) ist ein 4/3-Wegeventil mit einer neutralen Mittelstellung und zwei aktiven Aussenstellungen,
— das Vierwegeventil (12) verbindet in einer aktiven Aussenstellung eine Seite des Schaltzylinders (13) mit der Fluidquelle (24) nur dann, wenn der Handschalthebel (2) in einem Knotenpunkt (22, 29) zwischen dem Wählpfad (18) und einer von zwei unmittelbar benachbarten Schaltgassen (16, 17) steht und dabei der Ventilschieber (11) entweder in die Steuernut (20) eingetaucht ist oder auf dem Steuernocken (21) steht; in allen anderen Stellungen des Handschalthebels (2) steht der Ventilschieber (11) auf der Zylinderfläche (19) der Steuerfläche (10) und verbindet das Vierwegeventil (12) in der neutralen Mittelstellung beide Seiten des Schaltzylinders (13) mit dem Behälter (26).

2. Schalteinrichtung nach Anspruch 1, gekennzeichnet durch die Merkmale:
— die Schaltgabel (14) des Bereichsgetriebes trägt einen Sperrsteg (32),
— die Schaltwelle (1) trägt eine erste Sperrfläche (33),
— die Sperrfläche (33) ist ein Teil einer zur Schaltwelle (1) konzentrischen Zylinderfläche (43) mit einer axialen Sperrnut (34),
— ein erster Sperrbolzen (35) ist zwischen der Schaltgabel (14) und der Sperrfläche (33) im Gehäuse geführt,
— eine Feder drückt den Sperrbolzen (35) gegen die Sperrfläche (33),
— in einer ersten Sperrstellung verhindert der Sperrbolzen (35), abgestützt durch den Sperrsteg (32) und eingetaucht in die Sperrnut (34), ein Verdrehen der Schaltwelle (1) und damit ein Schalten des Wendegetriebes, solange nicht die Schaltgabel (14) des Bereichsgetriebes eine ihrer zwei Endstellungen erreicht hat,
— in einer zweiten Sperrstellung verhindert der Sperrbolzen (35), abgestützt durch die Zylinderfläche (43) und eingetaucht neben dem Sperrsteg (32), ein Verschieben der Schaltgabel (14) des Bereichsgetriebes aus einer ihrer zwei Endstellungen heraus, solange die Schaltwelle (1) verdreht ist, derart, dass eine Richtung des Wendegetriebes geschaltet ist.

3. Schalteinrichtung nach Anspruch 2, gekennzeichnet durch die Merkmale:
— eine Schaltgabel (36) eines Kriechgruppengetriebes oder eine von der Schaltgabel (36) gegen eine Feder verschiebbare Sperrstange (37) trägt eine Sperrstufe (38),
— die Schaltwelle (1) trägt eine zweite Sperrfläche (41),
— die Sperrfläche (41) ist ein Teil einer zur Schaltwelle (1) konzentrischen Zylinderfläche (42) mit einer umlaufenden Sperrnut (39),
— ein zweiter Sperrbolzen (40) ist zwischen der Schaltgabel (36) oder der Sperrstange (37) und der Sperrfläche (41) im Gehäuse geführt,
— eine Feder drückt den Sperrbolzen (40) gegen die Sperrfläche (41),
— in einer ersten Sperrstellung verhindert der Sperrbolzen (40), abgestützt durch die Sperrstufe (38) und eingetaucht in die Sperrnut (39), ein axiales Verschieben der Schaltwelle (1) und damit ein Schalten des Bereichsgetriebes aus einer langsamen Stufe heraus, solange die Schaltgabel (36) in einer Stellung für eine langsame Stufe des Kriechgruppengetriebes,
— in einer zweiten Sperrstellung verhindert der Sperrbolzen (40), abgestützt durch die Zylinderfläche (42) und eingetaucht vor der Sperrstufe (38), ein Verschieben der Schaltgabel (36) in die Stellung für die langsame Stufe des Kriechgruppengetriebes, solange nicht die Schaltwelle (1) in der Stellung für die langsame Stufe des Bereichsgetriebes ist.

4. Schalteinrichtung nach Anspruch 1, gekennzeichnet durch das Merkmal: der Schaltfinger (4) betätigt einen Mitnehmer (9) für eine Parksperreinrichtung, wenn der Handschalthebel (2) in einer dritten Schaltgasse (15) bewegt wird.

## Claims

1. A gear shifting device with the following features:
— a shift lever (2) shifting a reversing gear and a range-change gear of a group transmission,
— gear shifting gate (5) positively fixed within the housing guides the shift lever (2) within parallel individual shift gates (15, 16, 17) and in one selector gate (18) arranged at a right angle to the shift gates (15, 16, 17),
— the shift lever (2) is connected with a selector shaft (1) and a control face (10),

— control face (10) controls a valve spool (11) of a 4-way valve (12),

— the 4-way valve (12) controls the pressure fluid between a fluid supply source (24), the two ends of a double acting shift cylinder (13) and a reservoir (26),

— the shift cylinder (13) actuates a shift fork (14) of the range-change gear, if shift lever (2) is moved in selector gate, displacing selector shaft (1) in axial direction,

— a shift finger (4) on selector shaft (1) actuating a shift fork (7) of reversing gear, if shift lever (2) is moved in one of the shift gates (16, 17), rotating selector shaft (1),

characterized in that:

— control face (10) is an integral part of a cylinder face (19) having an axial control groove (20) arranged concentrically with regard to selector shaft (1), and having a control cam (21) along the same surface line,

— the 4-way valve (12) is a 4/3-way valve with a neutral centre position and two active end positions,

— the 4-way valve combines, in one active end position, one side of the shift cylinder (13) with the fluid supply source (24) only if the shift lever (2) is set in an interesecting point (22, 29) between selector gate (18) and one of two immediately adjacent shift gates (16, 17),

— and having the valve spool (11) either located in control groove (20) or on control cam (21),

— valve spool (11) is located in all other positions of shift lever (2) on cylinder face (19) of control face (10), and 4-way valve (12) in neutral central position connects both ends of shift cylinder (13) with reservoir (26).

2. Gear shifting device according to claim 1, characterized in that:

— shift fork (14) of range-change group has a locking web (32),

— selector shaft (1) has a first locking face (33),

— this locking face (33) is an integral part of a cylinder face (43) having a locking groove (34) in axial direction, and arranged concentrically to the selector shaft (1),

— a first locking pin (35) is guided between shift fork (14) and locking face (33),

— a spring presses locking pin (35) against locking face (33),

— the locking pin (35), supported by locking web (32) and located in locking groove (34) prevents, in a first locking position, rotation of selector shaft (1) and thus engagement of reverse gear, as long as shift fork (14) of range-change gear has not reached one of its two end positions,

— locking bolt (35), supported by cylinder face (43) and engaged next to locking web (32), prevents, in a second locking position, displacement of the shift fork (14) of the range-change gear from one of its two end positions, as long as selector shaft (1) is rotated so far that one operating direction of the reversing gear is engaged.

3. A gear shifting device according to claim 2, characterized in that:

— a selector fork (36) of a crawler range gear or a locking pin (37), displaceable against spring bias by selector fork (36), has a locking recess (38),

— selector shaft (1) has a second locking face (41),

— the locking face (41) is an integral part of a cylinder face arranged concentrically with regard to selector shaft (1), having a circular locking groove (39),

— a second locking pin (40) is guided within the housing between the selector fork (36) or the locking pin (37) and the locking face (41),

— a spring presses locking pin (40) against the locking face (41),

— the locking pin (40), supported by locking recess (38) and located in locking nut (39), prevents, in a first locking position, an axial displacement of the selector shaft (1) and shifting of the range-change gear from one lower range, as far as the shift fork (36) is engaged in a position for a low range of the crawler range gear,

— the locking pin (40), supported by cylinder face (42) and located before locking recess (38), prevents, in a second locking position, a displacement of the shifting fork (36) into the position for the low range of the crawler range gear, as long as the selector shaft (1) has not reached the position for the low range of the range-change gear.

4. Gear shifting device according to claim 1, characterized in that: shift finger (4) actuates driver (9) for a parking interlock, if shift lever (2) is moved in a third shift gate (15).

**Revendications**

1. Dispositif de changement de vitesses comportant les particularités suivantes:

— un levier de commande à main (2) commande une boîte d'inversion et un groupe-relais d'une transmission par engrenage à groupe-relais,

— une grille de guidage (5), qui est fixe par rapport au carter, guide le levier de commande (2) dans des couloirs parallèles de sélection (15, 16, 17) et dans un couloir central (18) perpendiculaire aux couloirs de sélection (15, 16, 17),

— le levier de commande (2) est raccordé à un arbre de commande (1) et à une surface de commande (10),

— la surface de commande (10) commande un tiroir (11) d'une soupape à quatre voies (12),

— la soupape à quatre voies (12) commande le passage d'un fluide de pression entre une source de fluide (24), deux côtés d'un cylindre de sélection à double effet (13) et un réservoir (26),

— le cylindre de sélection (13) actionne une fourchette de sélection (14) du groupe-relais quand le levier de commande (2) est déplacé dans le couloir longitudinal (18) et que l'arbre de commande (1) coulisse axialement,

— un doigt de sélection (4), monté sur l'arbre de commande (1), actionne une fourchette de sélection (7) de la boîte d'inversion quand le levier de commande (2) est déplacé dans un couloir de sélection (16, 17) et que l'arbre de commande (1) pivote, caractérisé par les particularités suivantes:
— ladite surface de commande (10) constitue une partie d'une surface cylindrique (19) concentrique par rapport à l'arbre de commande (1) et pourvue d'une rainure axiale de commande (20), et elle se trouve sur la même génératrice qu'un mentonnet de commande (21),
— la soupape à quatre voies (12) est une soupape à 4/3 voies ayant une position centrale neutre et deux positions extérieures actives,
— dans une position extérieure active, la soupape à quatre voies (12) ne relie un côté du cylindre de sélection (13) avec la source de fluide (24) que lorsque le levier de commande (2) se trouve sur un point d'intersection (22, 29) entre le couloir central (18) et l'un des deux couloirs de sélection (16, 17) voisins l'un de l'autre et que le tiroir de soupape (11) se trouve alors soit engagé dans la rainure de commande (20), soit en appui sur le mentonnet de commande (21); dans toutes les autres positions du levier de commande (2), le tiroir de soupape (11) est en appui sur la surface cylindrique (19) de la surface de commande (10) et la soupape à quatre voies (12) relie, dans sa position centrale neutre, les deux côtés du cylindre de sélection (13) au réservoir (26).

2. Dispositif selon la revendication 1, caractérisé par les particularités suivantes:
— la fourchette de sélection (14) du groupe-relais comporte une nervure de verrouillage (32),
— l'arbre de commande (1) comporte une première surface d'arrêt (33),
— la surface d'arrêt (33) est une partie d'une surface cylindrique (43) concentrique à l'arbre de commande (1) et pourvue d'une rainure d'arrêt axiale (34),
— une première tige de verrouillage (35) est guidée dans le carter entre la fourchette de sélection (14) et la surface d'arrêt (33),
— un ressort pousse la tige de verrouillage (35) contre la surface d'arrêt (33),
— dans une première position de verrouillage, la tige de verrouillage (35), épaulée par la nervure de verrouillage (32) et engagée dans la rainure d'arrêt (34), empêche une rotation de l'arbre de commande (1) et donc un enclenchement de la boîte d'inversion, tant que la fourchette de sélection (14) du groupe-relais n'a pas atteint l'une de ses deux positions extrêmes,

— dans une seconde position de verrouillage, la tige de verrouillage (35), épaulée par la surface cylindrique (43) et engagée à côté de la nervure de verrouillage (32), empêche la fourchette de sélection (14) du groupe-relais de quitter l'une de ses deux positions extrêmes, tant que l'arbre de commande (1) est tourné de telle manière qu'un sens de la boîte d'inversion est enclenché.

3. Dispositif selon la revendication 2, caractérisé par les particularités suivantes:
— une fourchette de sélection (36) d'une boîte de réduction, ou une barre de verrouillage (37) coulissant sous l'effet de la fourchette de sélection (36) à l'encontre d'un ressort, comporte un gradin de verrouillage (38),
— l'arbre de commande (1) comporte une seconde surface d'arrêt (41),
— la surface d'arrêt (41) est une partie d'une surface cylindrique (42) concentrique à l'arbre de commande (1) et pourvue d'une rainure circulaire d'arrêt (39),
— une seconde tige de verrouillage (40) est guidée dans le carter entre la fourchette de sélection (36) ou la barre de verrouillage (37) et la surface d'arrêt (41),
— un ressort presse la tige de verrouillage (40) contre la surface d'arrêt (41),
— dans une première position de verrouillage, la tige de verrouillage (40), épaulée par le gradin de verrouillage (38) et engagée dans la rainure d'arrêt (39), empêche un coulissement axial de l'arbre de commande (1) et ainsi un déclenchement du rapport lent du groupe-relais, tant que la fourchette de sélection (36) se trouve dans une position correspondant au rapport lent de la boîte de réduction,
— dans une seconde position de verrouillage, la tige de verrouillage (40), épaulée par la surface cylindrique (42) et engagée devant le gradin de sélection (36) vers sa position correspondant au rapport lent de la boîte de réduction, tant que l'arbre de commande (1) ne se trouve pas dans la position correspondant au rapport lent du groupe-relais.

4. Dispositif selon la revendication 1, caractérisé par la particularité suivante: le doigt de sélection (4) actionne un taquet d'entraînement (9) pour un verrouillage de stationnement quand le levier de commande (2) est déplacé dans un troisième couloir de sélection (15).

FIG.1

FIG. 2

FIG. 3

FIG. 4

0 199 731

FIG.5

FIG.6

FIG.7